# EUROPEAN PATENT APPLICATION

(11) **EP 2 090 822 A2**
(43) Date of publication of application: **19.08.2009**
(21) Application number: 08168842.6
(22) Date of filing: 11.11.2008
(51) Int. Cl.: F21V 5/04, G02B 27/00

(54) **Lighting Device**

(30) Priority: 12.11.2007 TW 96142623
(71) Applicant: Chiang, Whe Yi, Hsinchu City (TW); Pong, Ta Ching, Hsinchu City (TW)
(72) Inventor: Chiang, Whe Yi, Hsinchu City (TW); Pong, Ta Ching, Hsinchu City (TW)
(74) Representative: Lang, Christian

(57) **Abstract**

The invention discloses a lighting device, comprising at least one light source, a light source holder for holding the at least one light source, at least one microstructure member for deflecting light from the at least one light source, and at least one supporting member for maintaining the predetermined distance between the at least one light source and the at least one microstructure member.

## Description

### Background of the invention

### (a) Field of the Invention

The invention relates to a lighting device, particularly to a lighting device with a microstructure member to increase luminous uniformity and to decrease ghost imaging and glare.

### (b) Description of the Related Art

Nowadays, widely used lighting devices such as fluorescent lamps, incandescent bulbs, etc., have disadvantages like low luminous efficiency, high energy consumption, massive radiation heat. Spiral-type compact fluorescent lamps were invented by Ed Hammer, an engineer with General Electric, in response to the shortage of petroleum in 1970's and can save up to 75% energy compared to an incandescent bulb. However, compact fluorescent lamps have higher cost and also contain small amounts of mercury. Mercury emissions cause concerns for landfills and waste incinerators. Besides, compact fluorescent lamps have various disadvantages like being unusable in cold weather, unable to be used together with timers, being non-dimmable, generating heat, infrared interference, and low color rendering index (CRI). Thus, a lighting device using less power to supply the same amount of light as a fluorescent lamp from alternative technologies is urgently required.

Light emitting diode lamps (LED lamps) may compete with fluorescent lamps in the near future. LED lamps have advantages of high efficiency, small size, high durability (no filament or tube to break), long life, full dimmability, mercury-free, etc. However, currently LEDs do not deliver enough light output intensity at a reasonable cost for lighting uses. A single LED produces only small amount of light. LED lamps, also called LED bars or illuminators, use light emitting diodes as a source of illumination and are usually clusters of light emitting diodes in a suitable housing. However, LEDs contained in the lamp like multiple light sources have luminous uniformity, ghost imaging, and glare problems. These problems get worse when the LED lamp is disposed close to a user. Currently, frosted material is used to cover a LED lamp to solve the above mentioned problem, but luminous uniformity, ghost imaging, and glare problems still exist and the bright spots caused by LEDs usually still appear. The optical film, such as the diffusing sheet (plate) containing beads to achieve haze effect, used in the backlight module of a liquid crystal display (LCD) is also be used to solve the above mentioned problems. Neither frosted material nor a traditional diffusing film (plate) for LCD works well. In addition, frosted material and the traditional diffusing film (plate) for LCD decrease luminous seriously to harm the purpose of energy saving.

Besides a single LED produces a single color at a time. To produce white light necessary for lighting, wavelength conversion, color mixing, homoepitaxial ZnSe technologies are used. Under cost and efficiency considerations, a lamp using multiple colors of LEDs is preferred since there is no energy loss during the color conversion process and it may have higher efficiency. But there is a color-mixing optical member required in the lamp and more complicate design is also required.

### BRIEF SUMMARY OF THE INVENTION

In light of the above-mentioned backgrounds, one object of the invention is to provide a lighting device to increase luminous uniformity and to decrease ghost imaging and glare.

One object of the invention is to provide a lighting device, comprising at least one light source, a light source holder for holding the at least one light source; at least one microstructure member next to the at least one light source with a predetermined distance; and at least one supporting member for maintaining the predetermined distance between the at least one light source and the at least one microstructure member. The microstructure member comprises a substrate and at least one layer on at least one of the two main surfaces of the substrate. The at least one layer comprises a plurality of microstructures on at least one side thereof and each two of the microstructures are spaced with a predetermined distance. The predetermined distance for any two microstructures can be different. The microstructure is a solid formed by an end surface extending along a third curve with a predetermined length and has an axis lying along the main surface of the substrate as well as the direction of the predetermined length.

The shape of the end surface of the microstructure comprises a first curve with a first curvature radius, a second curve with a second curvature radius, and a plurality of connecting lines between the first and second curves to form a closed area. The shape of the end surface of the microstructure can be a semicircle, arc, parabola, or part of an ellipse.

Another object of the invention is to provide a lighting device where the at least one microstructure member comprises two layers, a first layer and a second layer, formed with a plurality of first microstructures and second microstructures, respectively. The first microstructures are aligned parallel to each other with respect to the axis of the first microstructure, the second microstructures are aligned parallel to each other with respect to the axis of the second microstructure, and the first microstructures are aligned to have an included angle with the second microstructures. The included angle is about 45-90°. In one example, the first layer is formed on one main surface of the substrate and the second layer is formed on the other main surface of the substrate. In another example, the first layer and the second layer are formed on the same main surface of the substrate and are made of different materials with different refractive indexes. The difference between the refractive indexes of the materials of the first layer and the second layer is more than 0.05.

The at least one light source can be a light emitting diode or a cold cathode fluorescent lamp (CCFL). The at least one light source comprises a plurality of light emitting diodes (LEDs) or cold cathode fluorescent lamps (CCFLs) forming a row, an array, or a matrix with more than a row.

The curvature radius of the first or second curve of the microstructure is preferably less than or equal to 400µm, more preferably less than or equal to 200µm, even more preferably less than or equal to 100µm. Besides, it is found to be preferably greater than 1µm, more preferably greater than 5µm.

Another object of the invention is to provide a microstructure member for deflecting light, comprising a substrate and at least one layer on at least one of the two main surfaces of the substrate, next to the at least one light source with a predetermined distance. The at least one layer comprises a plurality of microstructures on at least one side thereof. Each two of the microstructures are spaced with a predetermined distance and the predetermined distance for any two microstructures can be different. The microstructure is a solid formed by an end surface extending along a third curve with a predetermined length and has an axis lying along the main surface of the substrate as well as the direction of the predetermined length. The shape of the end surface of the microstructure comprises a first curve with a first curvature radius, a second curve with a second curvature radius, and a plurality of connecting lines between the first and second curves to form a closed area.

Another object of the invention is to provide a microstructure member for deflecting light, comprising a substrate and two layers, a first layer and a second layer. A plurality of first microstructures and second microstructures are formed on the first and second layers, respectively. The first microstructures are aligned parallel to each other with respect to the axis of the first microstructure, the second microstructures are aligned parallel to each other with respect to the axis of the second microstructure, and the first microstructures are aligned to have an included angle with the second microstructures. The included angle is about 45-90°. In one example, the first layer is formed on one main surface of the substrate and the second layer is formed on the other main surface of the substrate. In another example, the first layer and the second layer are formed on the same main surface of the substrate and are made of different materials with different refractive indexes. The difference between the refractive indexes of the materials of the first layer and the second layer is more than 0.05.

The lighting device according to the invention utilizes the microstructure member for deflecting light to increase luminous uniformity and to decrease ghost imaging and glare.

### Brief description of the drawings

Fig. 1 shows a schematic diagram illustrating various shapes of the end surface of the microstructure of the microstructure member according to one embodiment of the invention;

Fig. 2 shows a schematic diagram illustrating the microstructure that is a solid formed by an end surface extending along a third curve with a predetermined length according to one embodiment of the invention; and

Fig. 3 shows a schematic diagram illustrating a lighting device according to one embodiment of the invention.

### DETAILED DESCRIPTION OF THE INVENTION

What is probed according to the invention is a lighting device. Detail descriptions of the structure and elements will be provided in the following in order to make the invention thoroughly understood. Obviously, the application of the invention is not confined to specific details familiar to those who are skilled in the art. On the other hand, the common structures and elements that are known to everyone are not described in details to avoid unnecessary limits of the invention. Some preferred embodiments of the present invention will now be described in greater detail in the following. However, it should be recognized that the present invention can be practiced in a wide range of other embodiments besides those explicitly described, that is, this invention can also be applied extensively to other embodiments, and the scope of the present invention is expressly not limited except as specified in the accompanying claims.

A first embodiment of the invention discloses a lighting device, comprising at least one light source, a light source holder, at least one microstructure member, and at least one supporting member. The lighting device using a LED as its light source usually needs a plurality of LEDs in order to supply necessary amount of light. The light source can be a point light source, such as a single color (red, green, blue, etc.) LED and a white LED, or a linear light source, such as a cold cathode fluorescent lamp (CCFL). When the at least one light source comprises a plurality of LEDs, these LEDs can be aligned to form a row, an array, or a two-dimensional matrix. When the at least one light source comprises a plurality of CCFLs, the CCFLs can be aligned to form a row. The at least one light source is disposed on the light source holder. The light source holder can be a plate, a printed circuit board, mechanical parts, or the like.

The at least one microstructure member comprises a substrate and at least one layer on at least one of the two main surfaces of the substrate and is next to the at least one light source with a predetermined distance. The substrate can be a flexible or rigid film, sheet, plate, or object with various shapes. The at least one layer comprises a plurality of microstructures. Each two of the microstructures are spaced with a predetermined distance and the predetermined distance for any two microstructures can be different. The size of the microstructure and the distance between two microstructures are related to the type and size of the light source and the distance between every two light sources. In addition, the distance between the at least one microstructure member and the light source is related to the type and size of the light source and the distance between every two light sources. The microstructure is a solid formed by an end surface extending along a third curve with a predetermined length. The microstructure has an axis lying along the man surface of the substrate and also along the direction of the predetermined length. That is, the direction of the predetermined length is substantially parallel to the main surface of the substrate.

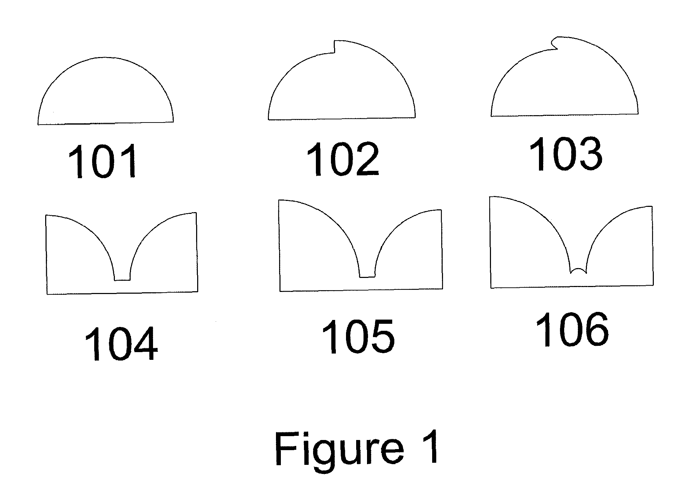

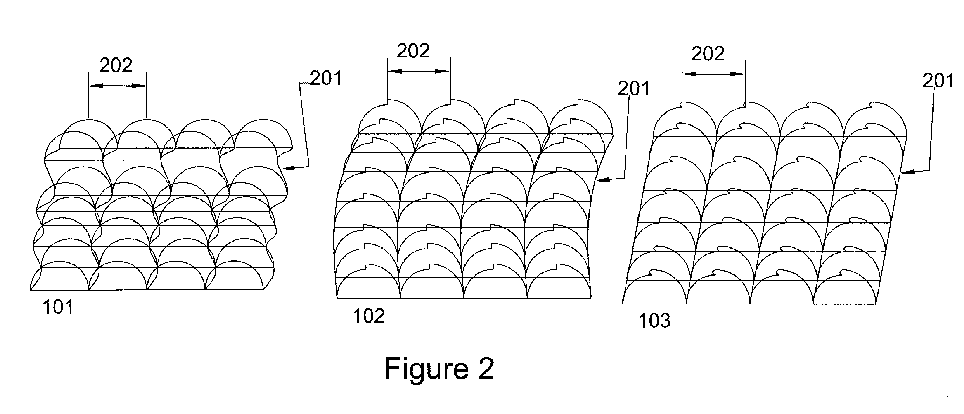

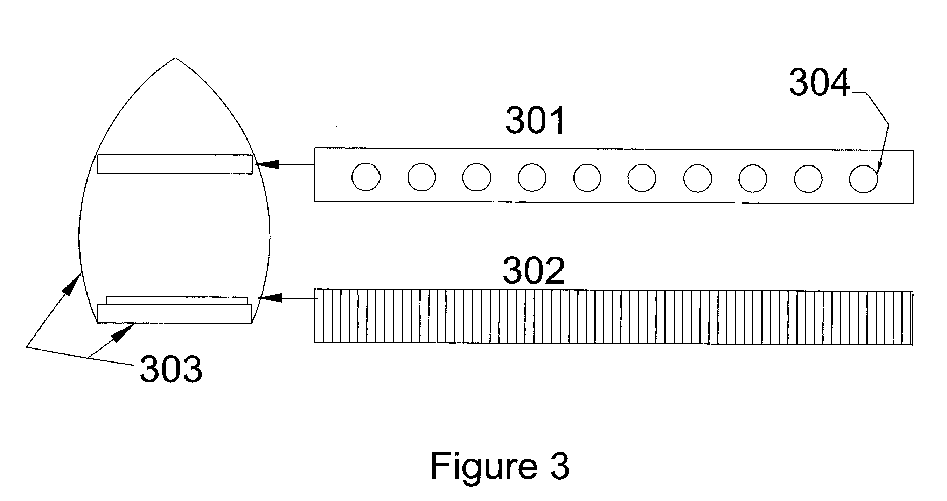

The shape of the end surface of the microstructure comprises a first curve with a first curvature radius, a second curve with a second curvature radius, and a plurality of connecting lines between the first and second curves to form a closed area. For example, the shape of the end surface of the microstructure is a semicircle, arc, parabola, or part of an ellipse. For instance, as the shape of the end surface of the microstructure is a semicircle, the first and second curves, quarter circles, form the semicircle. However, the first curvature radius of the first curve can be different from the second curvature radius of the second curve. The first curve can be either a concave curve or convex curve, so does the second curve. The first curve or the second curve can be an arc, parabola, or partial-elliptical curve. Fig. 1 shows examples of various types of the end surfaces 101-106 of the microstructure of the microstructure member according to one embodiment of the invention. As described above, the microstructure is a solid formed by an end surface extending along a third curve with a predetermined length and Fig. 2 shows examples for the third curve 201 and the definition of the predetermined length 202. The third curved can be an irregularly wiggled line, or a zigzag line, etc. In such design, the regular pattern does not exist and mura phenomenon can be diminished. Fig. 3 shows a schematic diagram illustrating a lighting device according to one embodiment of the invention (side view and top view), where 301 indicates the light source holder, 302 indicates the microstructure member, 303 indicates the supporting member, and 304 indicates the light emitting diode.

When light from the light source passes through these microstructures on the microstructure member, the light is refracted and the direction of light propagation changes. The profile of the microstructure deflects light with a different level, i.e. some light is deflected more and some light is deflected less due to different incident angles on the microstructure or multiple incident angles. It is considered as one of reasons for having the effect of increasing luminous uniformity and decreasing ghost imaging and glare. The pitch of the microstructures, the distance between each two microstructures, is preferably less than or equal to 400 µm, more preferably less than or equal to 200 µm, and even more preferably less than or equal to 120 µm. The first or second curvature radius of the first curve or the second curve, respectively, is preferably less than or equal to 200 µm, more preferably less than or equal to 100 µm, and even more preferably less than or equal to 60 µm. It is also found that the first or second curvature radius of the first curve or the second curve is preferably greater than 1 µm, more preferably greater than 5 µm.

A second embodiment of the invention discloses a lighting device that is the same as the first embodiment except the following matter. The microstructure member comprises a substrate and two layers, a first layer and a second layer, formed with a plurality of first microstructures and second microstructures, respectively, on the two main surfaces of the substrate. The first microstructures are aligned parallel to each other with respect to the axis of the first microstructure while the second microstructures are aligned parallel to each other with respect to the axis of the second microstructure. The first microstructures are aligned to have an included angle with the second microstructures. The included angle is preferably about 45-90°, more preferably 85-95°. The at least one light source comprises a plurality of light emitting diodes (LEDs) forming a row.

A third embodiment of the invention discloses a lighting device that is the same as the first embodiment except the following matter. The microstructure member comprises a substrate and two layers, a first layer and a second layer, formed with a plurality of first microstructures and second microstructures, respectively, on one of the two main surfaces of the substrate. The first layer and the second layer are formed on the same main surface of the substrate and are made of different materials with different refractive indexes. The difference between the refractive indexes of the materials of the first layer and the second layer is more than 0.05. The first microstructures are aligned parallel to each other with respect to the axis of the first microstructure while the second microstructures are aligned parallel to each other with respect to the axis of the second microstructure. The first microstructures are aligned to have an included angle with the second microstructures. The included angle is preferably about 45-90°, more preferably 85-95°. The at least one light source comprises a plurality of light emitting diodes (LEDs) forming a matrix with more than a row. Through appropriate design meaning by selecting suitable LEDs, the proper microstructure member, and disposing the LEDs and the microstructure member, the lighting devise can irradiate linear light.

A fourth embodiment of the invention discloses a lighting device that is the same as the first embodiment except the following matter. The lighting device comprises two microstructure members. The two microstructure members have the same characteristics as those in the first embodiment.

In another example, the microstructure member can be used together with the microlens sheet, the particle-mixed diffusing sheet, or prism sheet, or the like in the lighting device.

Thus, by utilizing the microstructure member according to the invention, a plurality of point light sources become a line light source while a plurality of line light sources become a plane light source. The luminous uniformity of the lighting device can be increased. In addition, glare due to the bright spot of a LED can be diminished and ghost image due to a plurality of light sources can be decreased as well. The lighting device according to the invention can be applied in light bars, desk lamps, reading lamps, etc.

### Example 1: lighting device

An array of LEDs with a viewing angle 130° is used as the light source. The LED is flat head type. The pitch between every two LEDs is 15 mm. A microstructure member is provided at the position having a distance of 20 mm apart from the light source. The microstructure member is the microstructure film according to the invention having the end surface 101 shown in Fig. 1. The curvature radius is 50 µm. The pitch between the microstructures is 110 µm. One supporting member made of PMMA supports the microstructure member to provide the mechanical strength and maintains the position of the microstructure member. One light source holder made of aluminum is united with the supporting member so that the distance between the light source and the microstructure member is maintained. One other light source holder is the connecting plate on which the LEDs are mounted. The lighting device radiates linear light.

The microstructure member in example 1 can be a microstructure plate. In another embodiment, the microstructures can be laminated with the supporting member.

### Example 2: lighting device

A 10 by 10 square matrix of LEDs with a viewing angle 130° is used as the light source. The LED is flat head type. The pitch between every two LEDs is 15 mm. A microstructure member is provided at the position having a distance of 20 mm apart from the light source. The microstructure member comprises two layers, a first layer and a second layer, formed with a plurality of first microstructures and second microstructures, respectively. The first microstructures are aligned parallel to each other with respect to the axis of the first microstructure. The second microstructures are aligned parallel to each other with respect to the axis of the second microstructure. The first microstructures are aligned to have an included angle of 90° with the second microstructures. The first microstructures and the second microstructures have the same end surface 101, shown in Fig. 1. The curvature radius is 50 µm. The pitch between the microstructures is 110 µm. The supporting member and the light source holder are similar to those in example 1. Finally, the lighting device functions as a planar light source.

Although the present invention has been fully described by the above embodiments, the embodiments should not constitute the limitation of the scope of the invention. For example, the microstructure member can be formed by curing the UV curable resin blended with plastic beads, ceramic spheres, or hollow ceramic spheres. Thus, the light refracting and deflecting properties can be varied to fulfill the design requirements. Various modifications or changes can be made by those who are skilled in the art without deviating from the spirit of the invention.

## Claims

1. A lighting device, comprising:
at least one light source;
a light source holder for holding the at least one light source;
at least one microstructure member, comprising a substrate and at least one layer on at least one of the two main surfaces of the substrate, next to the at least one light source with a predetermined distance wherein the at least one layer comprises a plurality of microstructures on at least one side thereof, each two of the microstructures are spaced with a predetermined distance, the predetermined distance for any two microstructures can be different, and the microstructure is a solid formed by an end surface extending along a third curve with a predetermined length and has an axis lying along the man surface of the substrate as well as the direction of the predetermined length; and
at least one supporting member for maintaining the predetermined distance between the at least one light source and the at least one microstructure member.

2. The device according to claim 1, wherein the shape of the end surface of the microstructure comprises a first curve with a first curvature radius, a second curve with a second curvature radius, and a plurality of connecting lines between the first and second curves to form a closed area.

3. The device according to claim 1, wherein the shape of the end surface of the microstructure is a semicircle, arc, parabola, or part of an ellipse.

4. The device according to claim 2, wherein the at least one microstructure member comprises two layers, a first layer and a second layer, formed with a plurality of first microstructures and second microstructures, respectively, the first microstructures are aligned parallel to each other with respect to the axis of the first microstructure, the second microstructures are aligned parallel to each other with respect to the axis of the second microstructure, and the first microstructures are aligned to have an included angle with the second microstructures.

5. The device according to claim 4, wherein the included angle is about between 45 to 90 degrees.

6. The device according to claim 4, wherein the first layer is formed on one main surface of the substrate and the second layer is formed on the other main surface of the substrate.

7. The device according to claim 4, wherein the first layer and the second layer are formed on the same main surface of the substrate and are made of different materials with different refractive indexes.

8. The device according to claim 7, wherein the difference between the refractive indexes of the materials of the first layer and the second layer is more than 0.05.

9. The device according to claim 4, wherein the shape of the end surface of the first or second microstructure comprises a first curve with a first curvature radius, a second curve with a second curvature radius, and a plurality of connecting lines between the first and second curves to form a closed area.

10. The device according to claim 1, wherein the at least one light source is a light emitting diode or a cold cathode fluorescent lamp (CCFL).

11. The device according to claim 1, wherein the at least one light source comprises a plurality of light emitting diodes (LEDs) or cold cathode fluorescent lamp (CCFL) forming a row, an array, or a matrix with more than a row.

12. The device according to claim 2 or 3, wherein the at least one light source comprises a plurality of light emitting diodes (LEDs) or cold cathode fluorescent lamps (CCFLs) forming a row that is about vertical to the axis of the microstructure.

13. The device according to claim 4, wherein the at least one light source comprises a plurality of light emitting diodes (LEDs) or cold cathode fluorescent lamps (CCFLs) forming a matrix with more than a row where the row of the matrix is about vertical to the axis of the first or second microstructure.

14. The device according to claim 2, wherein the curvature radius of the first or second curve of the microstructure is less than 200 µm and greater than 1 µm.

15. A microstructure member for deflecting light, comprising:
a substrate; and
at least one layer on at least one of the two main surfaces of the substrate, next to the at least one light source with a predetermined distance;
wherein the at least one layer comprises a plurality of microstructures on at least one side thereof; each two of the microstructures are spaced with a predetermined distance; the predetermined distance for any two microstructures can be different; the microstructure is a solid formed by an end surface extending along a third curve with a predetermined length and has an axis lying along the man surface of the substrate as well as the direction of the predetermined length; and
the shape of the end surface of the microstructure comprises a first curve with a first curvature radius, a second curve with a second curvature radius, and a plurality of connecting lines between the first and second curves to form a closed area.

16. The microstructure member according to claim 15, comprising two layers, a first layer and a second layer, wherein a plurality of first microstructures and second microstructures are formed on the first and second layers, respectively, the first microstructures are aligned parallel to each other with respect to the axis of the first microstructure, the second microstructures are aligned parallel to each other with respect to the axis of the second microstructure, and the first microstructures are aligned to have an included angle with the second microstructures.

17. The microstructure member according to claim 16, wherein the included angle is about between 45 to 90 degrees.

18. The microstructure member according to claim 16, wherein the first layer is formed on one main surface of the substrate and the second layer is formed on the other main surface of the substrate.

19. The microstructure member according to claim 16, wherein the first layer and the second layer are formed on the same main surface of the substrate and are made of different materials with different refractive indexes.

20. The microstructure member according to claim 19, wherein the difference between the refractive indexes of the materials of the first layer and the second layer is more than 0.05.
